# EUROPEAN PATENT SPECIFICATION

(11) **EP 0 402 340 B1**
(45) Date of publication and mention of the grant of the patent: **08.11.2000**
(21) Application number: 90870089.1
(22) Date of filing: 08.06.1990
(51) Int. Cl.: C08L 51/04, C08L 23/00, C08L 53/02

(54) **Polymeric material composition**
Polymerisatzusammensetzung
Composition de matériaux polymères

(30) Priority: 08.06.1989 GB 8913250
(43) Date of publication of application: 12.12.1990
(73) Proprietor: FINA RESEARCH S.A., B-7181 Seneffe (Feluy) (BE); Plastona (John Waddington) Limited, Leeds LS10 3TP (GB)
(72) Inventor: Defoor, Frans Maurice Joseph, B-1820 Strombeek-Bever (BE); Taylor, Harold Edward, Leeds LS25 5EB, Yorkshire (GB); Daumerie, Michel, Seabrook, Texas 77586 (US)
(74) Representative: Detrait, Jean-Claude

(56) References cited:
- EP-A- 0 291 352
- EP-A- 0 310 051
- US-A- 4 219 466
- US-A- 4 377 658
- WORLD PATENTS INDEX LATEST Derwent Publications Ltd., London, GB; AN 81-12778D

## Description

The present invention relates to a polymer composition and in particular to a polymer composition having improved migration properties in order to be used as packaging material, and particularly as a packaging material for food products. More particularly, the present inventions relates to polymer compositions comprising high-impact polystyrene (HIPS), high-density polyethylene (HDPE) or a mixture of HDPE and polypropylene (PP), at least one styrene/diene (S/D) linear block copolymer, and at least one styrene/diene radial block copolymer, said compositions having improved properties and particularly good migration properties.

In the field of packaging of food products, and particularly the packaging of margarine, milky products, pastries, or cookies, it would be desirable to have packaging compositions having the excellent working properties of polystyrene, combined to the remarkable properties of polypropylene, particularly its low permeability to water vapour. Indeed, polypropylene has a permeability to water vapour of 0.5 g per 100 micron (0.1 mm) thickness and per square meter.

However, one of the first drawbacks is the incompatibility of both polymers; said incompatibility leads to a strict separation of phases, resulting finally in a composition which is quite unusable industrially.

It has been proposed to use compositions comprising polystyrene, polypropylene and an essentially linear sequenced styrene/conjugated diene copolymer.

These compositions present the advantage to be perfectly homogeneous; moreover, they combine the thermoplasticity properties of polystyrene with the barrier properties of polypropylene. However, it has been noticed that with these compositions, the migrations of matter are largely not within the rules acceptable to the food industry. The migration properties of a composition which has to be used as packaging material for food products are very important. Indeed the components of the packaging material may not migrate within the packed product, which would otherwise be rendered unusable for consumption.

It has also been proposed to use compositions comprising polystyrene, polypropylene and a radial styrene/diene block copolymer. However, the migration properties of such material are insufficient in view of the increasing requirements in the food industry.

EP-A-0291352 discloses blends based on vinyl-aromatic polymers having the features of the pre-characterising portion of claim 1.

Therefore there exists a need for polymer compositions used in the packaging field, particularly in the packaging of food products, which not only possess ease of working, according to known techniques, such as by extrusion, injection and thermoforming, and a low permeability to water vapour, but which have in addition greatly improved migration properties.

The present invention aims to provide polymer compositions which meet this need.

It is therefore an object of the present invention to provide polymer compositions which fulfil the conditions set forth hereabove.

It is also an object of the present invention to provide thermoplastic material having good migration properties, suitable for the thermoforming at high speed cycles.

The present invention provides a polymeric material composition comprising a mixture of individual components comprising high impact polystyrene (HIPS) as a first component, at least one polyolefin as a second component, and at least one styrene-conjugated diene radial block copolymer (S/D radial) as a third component, characterised in that the composition further comprises as a fourth individual component a rubbery block copolymer wherein the rubbery block copolymer consists in at least one styrene-conjugated diene linear di-block copolymer (S/D linear) and in that the first, second, third and fourth components respectively are present in an amount of from 40 to 70% by weight, from 20 to 50% by weight, from 2 to 10% by weight and from 2 to 10% by weight, such percentages being each based on the total composition.

The at least one polyolefin preferably consists of high-density polyethylene or a mixture of high-density polyethylene and polypropylene.

The present invention will now be described in greater detail.

The polymeric material of the invention can exhibit superior migration properties compared to known polymeric materials and it has also been noticed that the rigidity properties of said material are improved, particularly the hardness and the tensile strength together with the flexural strength.

It has also been found that the polymeric material of the invention can retain all its physical properties when submitted to microwaves, like in a microwave oven, and particularly can avoid in that case any distortion or deformation.

HDPE and PP are well known polymers in the art, and they need not be further described. Both are used as supplied commercially, i.e. containing the usual additives.

HIPS is also known in the art; it consists of polystyrene containing at least 3 wt % of rubber, usually of polybutadiene rubber. It is prepared by dissolving the rubber in styrene monomer which is then polymerized.

The Applicant has now unexpectedly found that a significant reduction of migration of matter through the packaging material is obtained when the packaging composition comprises, in addition to HIPS and HDPE (or HDPE and pp), as additional individual components at least one S/D linear di-block copolymer and at least one S/D radial block copolymer.

S/D linear di-block copolymers are well known in the art. They are generally obtained by anionic polymerization in a solvent, with a catalyst of the alkylmetal type, usually alkyllithium. They contain one polystyrene block and one polydiene block. They may be prepared either by successive polymerization of styrene and diene, or by copolymerization of styrene and diene (in which case the blocks are joined by a small block of random S/D copolymer). The preferred S/D linear di-block copolymers are those wherein the diene is selected from the group comprising butadiene and isoprene, and having a styrene content higher than 50 wt %.

The S/D block copolymer having a radial structure (also called starshaped) is generally prepared from a conjugated diene, such as butadiene or isoprene, and from styrene. Said copolymer may be represented as constituted by at least three branches of block copolymer, preferably four, each branch comprising a block of diene polymer with a block of styrene polymer at one end. The other end is bound to other similar branches. Such radial block copolymers may be prepared in accordance with the process disclosed in the US patent n° 3,281,383.

These sequenced copolymers having a radial structure contain amounts of conjugated dienes, such as butadiene, isoprene or 2,3-dimethyl-1,3-butadiene or mixtures thereof, and amounts of styrene which may vary widely. Generally, the amount of conjugated diene is comprised between about 50 and 70% by weight, while the amount of styrene is comprised between about 50 and 30% by weight. Particularly advantageous results may be obtained with sequenced copolymers having a radial structure and which comprise from about 60 to 70% by weight of butadiene and from about 40 to 30% by weight of styrene.

The block copolymers used in the compositions of the invention have generally a molecular weight comprised between about 100,000 and about 300,000. This higher limit particularly depends on the blending capacity of the apparatus used.

The quantities of the components in the polymeric material are :
HIPS : from 40 to 70% by weight, preferably from 55 to 65% by weight;
HDPE or HDPE + PP : from 20 to 50% by weight of HDPE, preferably from 25 to 40% by weight and from 0 to 10% by weight of PP, preferably from 0 to 5% by weight, the sum of HDPE + PP being of from 20 to 50% by weight, preferably from 25 to 40% by weight;
S/D linear di-block copolymer : from 2 to 10% by weight, preferably from 4 to 6% by weight;
S/D radial block copolymer : from 2 to 10% by weight, preferably from 4 to 6% by weight;
the sum of all components being 100% by weight.

The mixing of the polymeric components is carried out by any suitable means. It is usually carried out by mixing together the components in the form of pellets, in a rotating arm mixer, and then by working the heated mixture in the plastic state in a screw extrudor-granulator.

The polymeric product thus obtained displays a melt index that is sufficiently high and is well suited for the transformation processes such as injection molding and thermo-forming of extruded sheets.

In the polymeric material according to the invention, the percentages of styrene-conjugated diene block copolymers as indicated above assume contents. As a matter of fact, it has been found that higher contents annul the thermoplastic properties of the product which is thus no more susceptible to be formed under heat in the plastic state. On the other hand, with a total content below the limit of 4% of the S/D block copolymers, the elastomeric properties are much reduced and the elastic recovery is at a minimum (as evidenced by the high elongation at break found in such material together with a poor impact resistance).

Another preferred characteristic of the material of the invention is the simultaneous use of at least one block copolymer of the S/D linear type and having a styrene content of more than 50% by weight and of at least one block copolymer of the S/D radial type having a rubber block content of more than 50% by weight. It has been found that this combination of linear and radial copolymers is greatly beneficial to the properties of the material, and particularly to the migration properties thereof. The weight ratio of linear to radial copolymers should most preferably be equal to about 1:1.

The preferred embodiments of the present invention can provide thermoplastic material having good migration properties, suitable for the thermoforming at high speed cycles.

The following examples are given in order to better illustrate the invention but without limiting it.

### Example 1

### a. Composition of the mixture.

HIPS having a melt flow index (MFI, measured according to ASTM D 1238 at 200°C with a force of 50N) of 2.2 g/10min. and containing 9.7 wt % of rubber polybutadiene;
HDPE : high density polyethylene having a MFI (MI-20 ASTMD 1238) of 50 g/10 min and a specific gravity of 0.963 g/cm³.
S/D linear : styrene/butadiene linear di-block copolymer having a molecular weight of 140000, prepared by copolymerization of 70 wt % of styrene and 30wt % of butadiene under conditions such that about 50 wt % of the styrene formed a block of pure polystyrene; and
S/D radial : four-branched radial block copolymer of styrene and butadiene having a total molecular weight of 140000, prepared by successive polymerization of 30 wt % of styrene and 70 wt % of butadiene.

The starting materials were in the form of pellets. They were mixed in a rotary three-arms mixer rotating at 158 rpm. The relative proportion of each component are given in the Table 1.

### b. Preparation of the polymeric material

The mixture obtained was then passed through a screw extrudergranulator and was subsequently worked under the following conditions in order to obtain a granulated material :

### Type of equipment

Single screw OMV extruder with a L/D ratio = 32; diameter of the screw : 60 mm;
Standard OMV screw for polystyrene ;
Kenics type static mixer (9 elements);
Filters used : 20, 60 and 80 mesh;
Nozzle for strings with 10 holes (diam. 30 mm);
Water bath;
Drying tunnel with blower for drying extruded strings;
Granulator (pellettizer).

### Operational conditions

| | | |
|---|---|---|
| Plastification chamber, | zone 1 | 150°C |
| | zone 2 | 175°C |
| | zone 3 | 160°C |
| | zone 4 | 185°C |
| | zone 5 | 195°c |
| Exchanger of the filter | | 200°C |
| Static mixer | | 205°C |
| Extrusion head | | 205°C |
| Pressure at the extrusion | | 105 Kg/cm² |
| Temperature of molten mass | | 210°C |
| Revolving speed of screw | | 98 rpm |
| Power load of motor | | 60 A |

### c. Properties of the material

The characteristics of the polymeric material are specified in the following table. Whenever necessary, the pellets were used to prepare samples adequate for testing including a thermoformed cup of 0.35 mm wall thickness.

An internal method was used in order to determine the migration of a polymer composition. A sample of the composition to be tested was taken out and was immersed in olive oil during 10 days at a temperature of 40°C. The sample was weighed before and after immersion. The sample was thereafter dried and olive oil was extracted with fluor hydrocarbons during 24 to 48 hours in order to remove the olive oil which has penetrated into the sample. After treatment, the amount of oil was determined by gas chromatography in the presence of methyl margarinate as standard. The total migration is determined by the difference between the amount of oil which penetrated the sample and the weight gain. No migration was observed (0 +/- 0.1 mg/dm²).

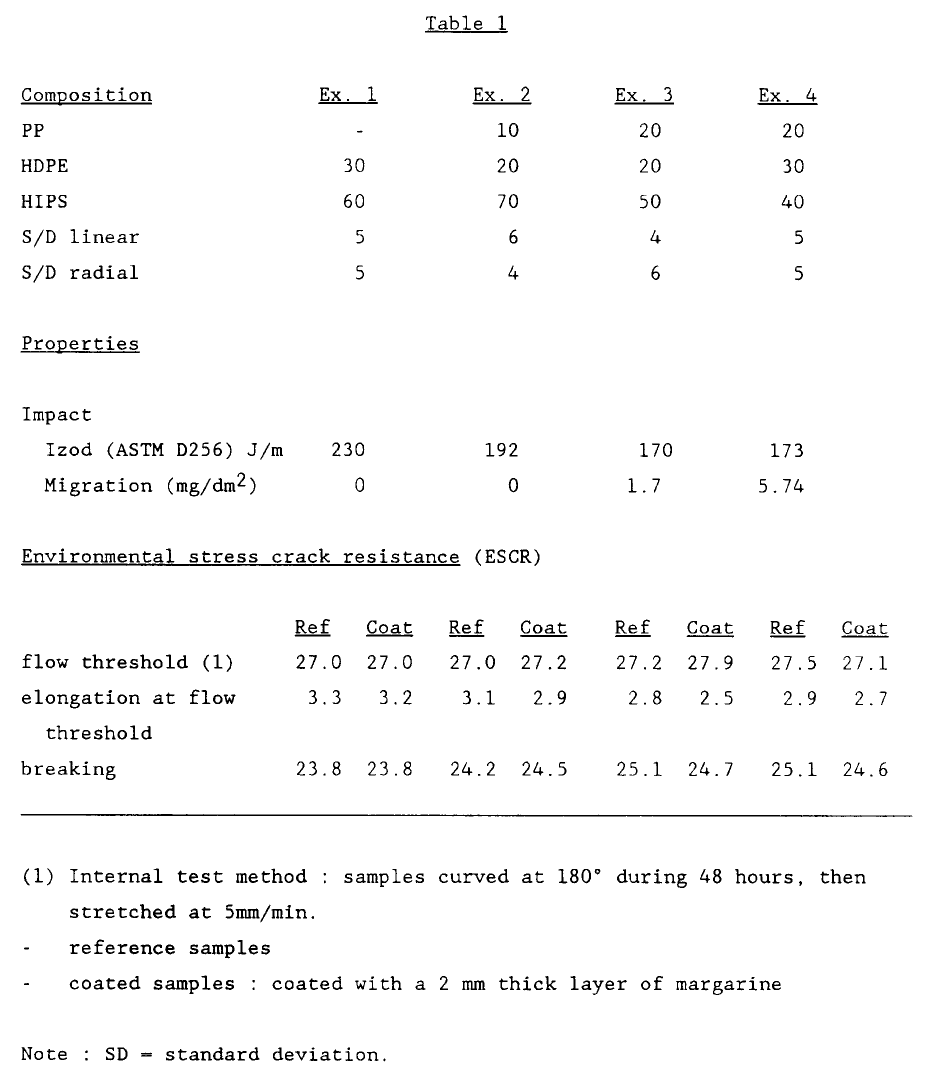

### Comparative examples 1 to 4

By way of comparison, several other blends were prepared with the compositions as mentioned in Table II. The components were the same, except for two components. The linear SBS (styrene-butadiene-styrene) block copolymer used had a molecular weight of 120000; it contained 75 wt % of styrene monomers, distributed in two blocks of pure polystyrene (25% each) and one block of random S/B copolymer. All tests were carried out as described in Example 1.

**Table II**

| | Comp. 1 | Comp. 2 | Comp. 3 | Comp. 4 |
|---|---|---|---|---|
| HIPS | 60 | 60 | 60 | 30 |
| HDPE | 30 | 30 | 30 | 60 |
| S/B linear | 10 | | | 5 |
| S/B radial | | 10 | | 5 |
| SBS linear | | | 10 | |
| Izod (indented) n° 1 (J/m) | 69.3 | 163 | 133 | 453 |
| Resistance to bending (MPa) | 1410 | | 1430 | |

| ESCR : | | | | |
|---|---|---|---|---|
| - flow threshold (MPa) | | 30.6 | 30.0 | 20.6 |
| - elongation (%) | | 2.7 | 2.8 | 13.2 |
| - breaking (MPa) | 28.2 | 26.4 | 21.6 | 15.7 |
| Migration (mg/dm²) | 12.95 | 10.94 | 32.3 | 12.75 |

### Comparative examples 5 and 6

Several blends of known compositions were prepared. All tests were carried out as described in Example 1. The migration properties were measured.

**Table III**

| | Ex. 5 | Ex. 6 |
|---|---|---|
| HIPS (9% rubber) | 45 | 45 |
| HDPE | | |
| PP | 45 | 45 |
| S/B radial | 10 | |
| SBS linear | | 10 |

| Properties | | |
|---|---|---|
| Migration (mg/dm²) | 16.7 | 32.5 |
| Note : all components used were as described in previous examples, | | |

## Claims

1. Polymeric material composition comprising a mixture of individual components comprising high impact polystyrene (HIPS) as a first component, at least one polyolefin as a second component, and at least one styrene-conjugated diene radial block copolymer (S/D radial) as a third component, characterised in that the composition further comprises as a fourth individual component a rubbery block copolymer wherein the rubbery block copolymer consists in at least one styrene-conjugated diene linear di-block copolymer (S/D linear) and in that the first, second, third and fourth components respectively are present in an amount of from 40 to 70% by weight, from 20 to 50% by weight, from 2 to 10% by weight and from 2 to 10% by weight, such percentages being each based on the total composition.

2. Polymeric material composition in accordance with claim 1 wherein the polyolefin is selected from high density polyethylene (HDPE), or a mixture thereof with polypropylene (PP).

3. Polymeric material composition in accordance with any one of claims 1 or 2, wherein the polyolefin content is of from 25 to 40% by weight.

4. Polymeric material composition in accordance with any one of claims 2 to 3, wherein the PP content is comprised between 0 and 10 % by weight on the total composition.

5. Polymeric material composition in accordance with claim 4, wherein the PP content is comprised between 0 and 5% by weight on the total composition.

6. Polymeric material composition in accordance with claim 1, wherein the S/D linear di-block copolymer is used in an amount comprised between 4 and 6% by weight.

7. Polymeric material composition in accordance with claim 1, wherein the S/D radial block copolymer is used in an amount comprised between 4 and 6% by weight.

8. Polymeric material composition in accordance with claim 1, wherein the HIPS content is comprised between 55 and 65% by weight.

9. Polymeric material composition in accordance with any one of the preceding claims, wherein the S/D linear di-block comprises more than 50% by weight of styrene.

10. Polymeric material composition in accordance with any one of the preceding claims, wherein the S/D radial block comprises from 50 to 70 % butadiene and from 50 to 30 % styrene.

11. Polymeric material composition in accordance with any one of the preceding claims, wherein the molecular weight of the rubbery copolymer is comprised between 100,000 and 300,000.

12. Packaging material comprising the polymeric material composition according to any foregoing claim.

## Patentansprüche

1. Polymermaterialzusammensetzung, umfassend eine Mischung aus einzelnen Komponenten, umfassend hochschlagfestes Polystyrol (HIPS) als eine erste Komponente, mindestens ein Polyolefin als eine zweite Komponente und mindestens ein Styrol-konjugiertes Dien Radialblockcopolymer (S/D Radikal) als ein dritte Komponente, dadurch gekennzeichnet, daß die Zusammensetzung ferner umfaßt als eine vierte einzelne Komponente ein kautschukelastisches Blockcopolymer, wobei das kautschukelastische Blockcopolymer aus mindestens einem Styrolkonjugiertes Dien linearem Diblockcopolymer (S/D linear) besteht, und dadurch, daß die ersten, zweiten, dritten und vierten Komponenten in einer Menge von 40 bis 70 Gew.%, von 20 bis 50 Gew.%, von 2 bis 10 Gew.% und von 2 bis 10 Gew.% vorhanden sind, wobei derartige Prozentsätze jeweils auf der Gesamtzusammensetzung basieren.

2. Polymermaterialzusammensetzung nach Anspruch 1, wobei das Polyolefin aus Hochdichtepolyethylen (HDPE) oder einer Mischung davon mit Polypropylen (PP) ausgewählt ist.

3. Polymermaterialzusamensetzung nach einem der Ansprüche 1 oder 2, wobei der Polyolefingehalt 25 bis 40 Gew.% beträgt.

4. Polymermaterialzusammensetzung nach einem der Ansprüche 2 bis 3, wobei der PP Gehalt zwischen 0 und 10 Gew.% in Bezug auf die Gesamtzusammensetzung enthalten ist.

5. Polymermaterialzusammensetzung nach Anspruch 4, wobei der PP Gehalt zwischen 0 und 5 Gew.% in Bezug auf die Gesamtzusammensetzung enthalten ist.

6. Polymermaterialzusammensetzung nach Anspruch 1, wobei das S/D lineare Diblock-Copolymer in einer Menge verwendet wird, die zwischen 4 und 6 Gew.% enthalten ist.

7. Polymermaterialzusammensetzung nach Anspruch 1, wobei das S/D Radialblockcopolymer in einer Menge verwendet wird, die zwischen 4 und 6 Gew.% enthalten ist.

8. Polymermaterialzusammensetzung nach Anspruch 1, wobei der HIPS Gehalt zwischen 55 und 65 Gew.% enthalten ist.

9. Polymermaterialzusammensetzung nach einem der vorhergehenden Ansprüche, wobei der S/D lineare Diblock mehr als 50 Gew.% Styrol umfaßt.

10. Polymermaterialzusammensetzung nach einem der vorhergehenden Ansprüche, wobei der S/D Radialblock 50 bis 70% Butadien und 50 bis 30% Styrol umfaßt.

11. Polymermaterialzusammnesetzung nach einem der vorhergehenden Ansprüche, wobei das Molekulargewicht des kautschukelastischen Copolymeren zwischen 100 000 und 300 000 enthalten ist.

12. Verpackungematerial, umfassend die Polymermaterialzusammensetzung nach einem vorhergehenden Anspruch.

## Revendications

1. Composition de matière polymère comprenant un mélange de composants individuels comprenant du polystyrène à résistance élevée aux chocs (HIPS) à titre de premier composant, au moins une polyoléfine à titre de deuxième composant et au moins un copolymère séquencé radial diénique conjugué avec du styrène (S/D radial) à titre de troisième composant, caractérisé en ce que la composition comprend en outre, à titre de quatrième composant individuel, un copolymère séquencé caoutchouteux dans lequel le copolymère séquencé caoutchouteux est constitué d'au moins un copolymère diséquencé linéaire diénique conjugué avec du styrène (S/D linéaire) et en ce que les premier, deuxième, troisième et quatrième composants respectivement sont présents en une quantité de 40 à 70 % en poids, de 20 à 50 % en poids, de 2 à 10 % en poids et de 2 à 10 % en poids, lesdits pourcentages se basant chacun sur la composition totale.

2. Composition de matière polymère selon la revendication 1, dans laquelle la polyoléfine est choisie parmi du polyéthylène haute densité (HDPE) ou un mélange de ce dernier avec du polypropylène (PP).

3. Composition de matière polymère selon l'une quelconque des revendications 1 ou 2, dans laquelle la teneur en polyoléfine s'élève de 25 à 40 % en poids.

4. Composition de matière polymère selon l'une quelconque des revendications 2 à 3, dans laquelle la teneur en PP est comprise entre 0 et 10 % en poids rapportés à la composition totale.

5. Composition de matière polymère selon la revendication 4, dans laquelle la teneur en PP est comprise entre 0 et 5 % en poids rapportés à la composition totale.

6. Composition de matière polymère selon la revendication 1, dans laquelle le copolymère diséquencé S/D linéaire est utilisé en une quantité comprise entre 4 et 6 % en poids.

7. Composition de matière polymère selon la revendication 1, dans laquelle le copolymère séquencé S/D radial est utilisé en une quantité comprise entre 4 et 6 % en poids.

8. Composition de matière polymère selon la revendication 1, dans laquelle la teneur en HIPS est comprise entre 55 et 65 % en poids.

9. Composition de matière polymère selon l'une quelconque des revendications précédentes, dans laquelle le copolymère diséquencé S/D linéaire comprend plus de 50 % en poids de styrène.

10. Composition de matière polymère selon l'une quelconque des revendications précédentes, dans laquelle le copolymère séquencé S/D radial comprend de 50 à 70 % de butadiène et de 50 à 30 % de styrène.

11. Composition de matière polymère selon l'une quelconque des revendications précédentes, dans laquelle le poids moléculaire du copolymère caoutchouteux est compris entre 100.000 et 300.000.

12. Matière d'emballage comprenant la composition de matière polymère selon l'une quelconque des revendications précédentes.
